# EUROPÄISCHE PATENTANMELDUNG

(11) **EP 1 213 465 A2**
(43) Veröffentlichungstag der Anmeldung: **12.06.2002**
(21) Anmeldenummer: 01124676.6
(22) Anmeldetag: 09.10.2001
(51) Int. Cl.: F02M 21/06, F02M 25/028

(54) **Verfahren und Vorrichtung zur Bereitstellung eines zündfähigen Arbeitsgases aus einem Kryokraftstoff**

(30) Priorität: 07.12.2000 DE 10060786
(71) Anmelder: Bayerische Motoren Werke Aktiengesellschaft, 80809 München (DE)
(72) Erfinder: Ringler, Jürgen, 86438 Kissing (DE); Fickel, Hans-Christian, 85368 Moosburg (DE)

(57) **Zusammenfassung**

Die Erfindung betrifft ein Verfahren und eine Vorrichtung zur Bereitstellung eines zündfähigen Arbeitsgases aus einem Kryokraftstoff, insbesondere Wasserstoff für eine Brennkraftmaschine. Erfindungsgemäß wird vorgeschlagen, daß der Kryo-kraftstoff aus einem wärmeisolierten Kraftstoffvorratsbehältnis entnommen wird, und der entnommene Kraftstoff durch einen Ansaugluft-Wärmetauscher geleitet und hierbei erwärmt wird, wobei in dem Wärmetauscher die Ansaugluft zunächst auf eine Temperatur abgekühlt wird, bei welcher etwaige, in der Ansaugluft enthaltene Feuchtigkeit ausfällt, das hierbei ausfallende Wasser abgeleitet wird und die getrocknete Luft weiter abgekühlt wird. In vorteilhafter Weise kann hierbei unabhängig vom Zustand der angesaugten Luft permanent ein deutlich erhöhter Zylinderbefüllungsgrad erreicht werden. Insbesondere im Falle eines Betriebs der Brennkraftmaschine in einem Teillastbereich mit starker Drosselung der Ansaugluft können unerwünschte Abweichungen von einer vorgegebenen stöchiometrischen Zusammensetzung des Arbeitsgases vermieden werden.

## Beschreibung

Die Erfindung betrifft ein Verfahren und eine Vorrichtung zur Bereitstellung eines zündfähigen Arbeitsgases aus einem Kryokraftstoff, insbesondere Wasserstoff für den Betrieb einer Brennkraftmaschine.

Die Speicherung von Kryokraftstoffen, d.h. Kraftstoffen, deren Siedepunkt oder kritische Temperatur bei dem im Tank herrschenden Druck unterhalb üblicher Umgebungstemperaturen liegt, kann alternativ zu Druckkessel oder Metallhydridspeicheranordnungen in isolierten Tankanordnungen erfolgen. Letztere, auch als Kryo-Tanks bezeichnete Tankanordnungen, zeichnen sich neben einem vergleichsweise geringen Eigengewicht auch durch ein günstiges Bauraum/Speicherkapazitätsverhältnis aus. Die zur flüssigen Speicherung des Kryokraftstoffes vorgesehenen Tankanordnungen werden vorzugsweise mit unterkühltem Kraftstoff befüllt. Das durch den Tankdruck bestimmte Siedetemperaturniveau kann durch Kühleinrichtungen oder durch Verdampfen von Kraftstoff, aufrecht erhalten werden. Die Bereitstellung des für den Betrieb einer Brennkraftmaschine erforderlichen Kraftstoffstromes erfolgt üblicherweise unter Zufuhr eines geregelten Wärmestroms, zu dem zunächst flüssigen Kraftstoff, wobei entsprechend der durch den Wärmestrom zugeführten Verdampfungsenthalpie gasförmiger Kraftstoff generiert wird.

Aus DE 196 02 881 ist ein Verfahren zur Bereitstellung eines brennfähigen Arbeitsgases aus einem Kryokraftstoff/Luft-Gemisch bekannt, bei welchem der in gasförmigem Zustand aus einem Kryotank entnommene Kraftstoff in einen Mischer geleitet und darin mit Ansaugluft gemischt wird, wobei der Kraftstoff vor Eintritt in den Mischer durch einen Wärmetauscher geführt wird und über diesen Wärmetauscher die dem Mischer zuströmende Ansaugluft vor Eintritt in den Mischer gekühlt wird. Durch diese Anordnung wird es aufgrund der erhöhten Dichte der Ansaugluft möglich, einen höheren Zylinderbefüllungsgrad zu erreichen und damit die Leistungsdichte der Brennkraftmaschine, zu erhöhen.

Der Erfindung liegt die Aufgabe zugrunde, ein Verfahren und eine Vorrichtung zur Bereitstellung eines zündfähigen Arbeitsgases aus einem Kryokraftstoff zu schaffen, bei welchem eine vorgegebene stöchiometrische Zusammensetzung des Arbeitsgases auf zuverlässige Weise in einem engen Toleranzbereich eingehalten werden kann.

Diese Aufgabe wird erfindungsgemäß gelöst durch ein Verfahren, bei welchem ein brennfähiges Arbeitsgas aus Ansaugluft und einem kryogen gespeicherten Kryokraftstoff gebildet wird, wobei der Kryokraftstoff aus einem wärmeisolierten Kraftstoffvorratsbehältnis entnommen wird, und der entnommene Kraftstoff durch einen Ansaugluftwärmetauscher geleitet und hierbei erwärmt wird, wobei in dem Wärmetauscher die Ansaugluft getrocknet wird, indem diese zunächst auf eine Temperatur zwischengekühlt wird, bei welcher etwaige in der Ansaugluft enthaltene Feuchtigkeit eisfrei ausfällt, das ausgefällte Wasser abgeleitet wird und anschließend die getrocknete Luft auf eine vorgegebene Ausgangstemperatur weiter abgekühlt wird.

Dadurch wird es auf vorteilhafte Weise möglich, bei einer mobilen Brennkraftmaschine, insbesondere einer Kfz-Brennkraftmaschine, das durch einen Kryokraftstoff bereitgestellte Kältepotential zur extrem tiefen Abkühlung der Ansaugluft heranzuziehen. In vorteilhafter Weise kann hierbei unabhängig vom Zustand der angesaugten Luft permanent ein deutlich erhöhter Zylinderbefüllungsgrad erreicht werden. Insbesondere im Falle eines Betriebs der Brennkraftmaschine in einem Teillastbereich mit starker Drosselung der Ansaugluft kann eine Verfälschung des Mischungsverhältnisses in vorteilhafter Weise vermieden werden.

Die Trocknung der Ansaugluft erfolgt vorzugsweise durch Abkühlung auf eine Temperatur knapp unterhalb des Taupunktes. Die Abscheidung des Wassers kann durch Wirbelbildung unterstützt werden. Das ausgeschiedene Wasser kann abgeleitet und ggf. separat in den Brennraum eingebracht werden.

Gemäß einer besonders bevorzugten Ausführungsform der Erfindung wird der Kraftstoff in gasförmigem Zustand durch den Wärmetauscher geleitet. Hierbei wird es möglich, einen Pufferspeicher zur Deckung kurzfristig erhöhten Kraftstoffbedarfs vor dem Wärmetauscher anzuordnen. Hierdurch wird eine hohe Druckkonstanz am Ausgangsbereich des Wärmetauschers erreicht.

Alternativ zu der vorangehend genannten Maßnahme - oder in besonders vorteilhafter Weise auch in Kombination hiermit - ist es möglich, den Kraftstoff zumindest abschnittsweise in flüssigem Zustand durch den Wärmetauscher zu leiten. Hierbei wird es möglich, im Wärmetauscher einen vergleichsweise großen Wärmestrom aus der angesaugten Luft abzuleiten. Hierbei lassen sich auch im Falle einer Aufladung beispielsweise in Verbindung mit einem Abgasturbolader vergleichsweise niedrige Verbrennungsspitzentemperaturen erreichen. In vorteilhafter Weise erfolgt die Kühlung der Ansaugluft bzw. die Erwärmung des Kraftstoffes hierbei im Gegenstromprinzip.

Gemäß einer besonders bevorzugten Ausführungsform der Erfindung handelt es sich bei dem verwendeten Kraftstoff um Wasserstoff. Dieser Wasserstoff wird vorzugsweise in einem wärmeisolierten Tank bevorratet, wobei der Kraftstoff in dem Tank vorzugsweise auf eine Temperatur von weniger als 20K abgekühlt ist.

Die eingangs angegebene Aufgabe wird erfindungsgemäß auch gelöst durch eine Vorrichtung zur Bereitstellung eines brennfähigen Arbeitsgases aus kryogen gespeichertem Kryokraftstoff und sauerstoffhaltiger Ansaugluft für eine Brennkraftmaschine, mit einer Entnahmeeinrichtung zur Entnahme von Kryokraftstoff aus einem wärmeisolierten Kraftstoffvorratsbehältnis, einem Wärmetauscher zur Erwärmung des entnommen Kryokraftstoffes und zur Kühlung der Ansaugluft, wobei in dem Wärmetauscher ein erster Kühlabschnitt ausgebildet ist, zur Abkühlung der Ansaugluft auf eine Temperatur unterhalb des Taupunktes und weiterhin eine Ableitungseinrichtung vorgesehen ist, zur Ableitung des ausfallenden Wassers und ein zweiter Kühlabschnitt vorgesehen ist, in welchem die getrocknete Ansaugluft weiter abgekühlt wird.

Dadurch wird es insbesondere bei einem Kraftfahrzeug möglich, unter Nutzung des durch den Kraftstofftank bereitgestellten Kältepotentiales eine verbesserte Verbrennung bei gleichzeitiger Steigerung der Leistungsdichte der Brennkraftmaschine unabhängig vom Umgebungszustand der Ansaugluft zu erreichen.

Der Wärmetauscher kann als Gas/Gas Wärmetauscher oder - zur Erreichung tieferer Ansauglufttemperaturen - als Flüssig/Gas Wärmetauscher ausgebildet sein, so daß der Kraftstoff zumindest abschnittsweise in flüssigem Zustand den Wärmetauscher durchströmt. Insbesondere bei einer Anordnung des Wärmetauschers als Gegenstromwärmetauscher können hierbei extrem tiefe Temperaturen der Ansaugluft erreicht werden.

Vorzugsweise ist eine Fördereinrichtung vorgesehen, zur zwangsweisen Förderung des Kraftstoffs durch den Wärmetauscher unter einem gegenüber dem Tankdruck erhöhten Druck.

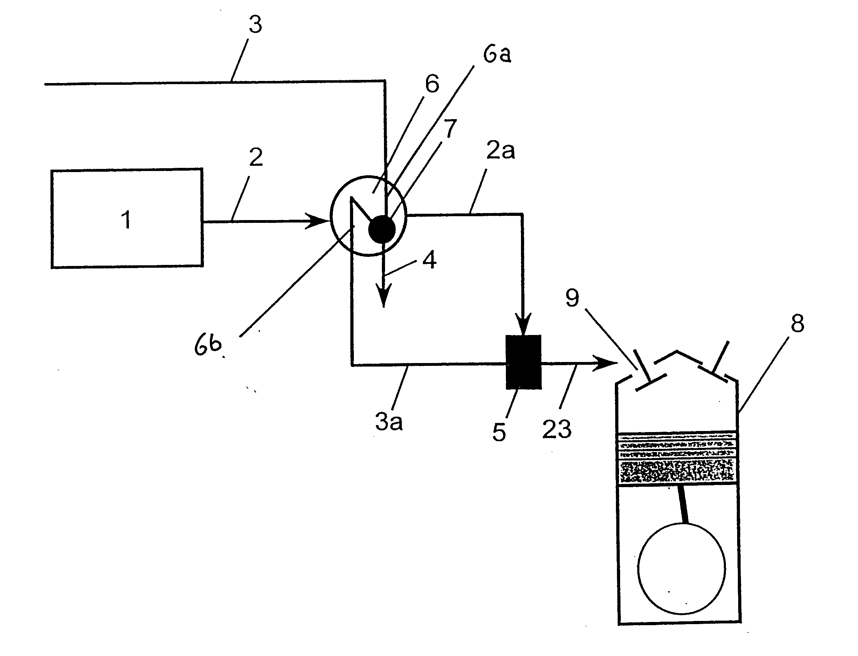

Weitere vorteilhafte Einzelheiten der Erfindung ergeben sich aus der nachfolgenden Beschreibung in Verbindung mit der Zeichnung. Die einzige Figur zeigt:
Eine Schemadarstellung eines erfindungsgemäßen Systems zur Bereitstellung eines brennfähigen Arbeitsgases im Brennraum einer Brennkraftmaschine aus einem Kryokraftstoff, insbesondere Wasserstoff, wobei die Ansaugluft in mehreren Stufen abgekühlt wird und vor Abkühlung auf ein Endtemperaturniveau entfeuchtet wird und der Kryokraftstoff erst der entfeuchteten Ansaugluft zugeführt wird.

Das schematisch dargestellte System umfaßt einen thermisch isolierten Kryo-Tank 1, in welchem ein auf seine kritische Temperatur gekühlter Kraftstoff bevorratet ist. Bei dem hier gezeigten System ist der Tank als Drucktank ausgebildet, wobei im Inneren des Kryo-Tanks 1 ein Druck im Bereich von 1 bis 28 bar herrscht.

An den Kryo-Tank 1 ist eine Leitungseinrichtung 2 angeschlossen. Diese Leitungseinrichtung 2 ist ebenfalls thermisch isoliert ausgebildet. Über die Leitungseinrichtung 2 kann selektiv flüssiger oder gasförmiger Kraftstoff aus dem Kryo-Tank 1 entnommen werden.

Die Leitungseinrichtung 2 führt über einen nach außen thermisch isolierten Wärmetauscher 6 zu einem Leitungsabschnitt 2a. Über den Leitungsabschnitt 2a ist die Leitungseinrichtung 2 unter Zwischenschaltung des Wärmetauschers 6 mit einem Mischer 5 verbunden.

Durch den Mischer 5 wird das Arbeitsgas nach Maßgabe eines vorgegebenen stöchiometrischen Verhältnisses aus dem Kryokraftstoff und der getrockneten und gekühlten Ansaugluft zusammengesetzt.

An den Wärmetauscher 6 ist eine hier als Saugleitung 3 bezeichnete Leitungseinrichtung angeschlossen, über welche ein sauerstoffhaltiges Gas angesaugt - oder unter Überdruck hindurch gedrängt - werden kann. Die Saugleitung 3 führt zu einem in dem Wärmetauscher 6 vorgesehenen ersten Wärmetauscherabschnitt 6a. Dieser erste Wärmetauscherabschnitt 6a ist derart ausgebildet, daß in diesem die Ansaugluft auf eine Temperatur knapp unterhalb des Taupunktes abgekühlt wird. Die Kühlleistung in dem ersten Wärmetauscherabschnitt 6a ist nach Maßgabe einer Steuereinheit steuerbar.

Im Endbereich des ersten Wärmetauscherabschnitts 6a ist eine Ableitungseinrichtung 7 vorgesehen, zum Ableiten des ausfallenden Wassers.

An den ersten Wärmetauscherabschnitt 6a schließt sich ein zweiter Wärmetauscherabschnitt 6b an, in welchem die Ansaugluft auf ein unterhalb des Gefrierpunktes liegendes Temperaturniveau abgekühlt werden kann.

Das über die Ableitungseinrichtung abgeleitete Wasser kann über eine vorzugsweise frostgeschützte Leitung 4 weiteren Anwendungen zur Verfügung gestellt werden.

Das durch den ersten Wärmetauscherabschnitt 6a und die Ableitungseinrichtung 7 getrocknete und durch den zweiten Wärmetauscherabschnitt 6b tiefgekühlte sauerstoffhaltige Gas gelangt über den Leitungsabschnitt 3a, den Mischer 5 und von hieraus über eine Einlaßleitung 23, in den Bereich eines Einlaßventiles 9 einer Brennkraftmaschine 8.

Unter dem Ansaugluft ist im vorliegenden Fall ein gasförmiges Medium zu verstehen, das zumindest eine als Oxidationsmittel wirksame Gasfraktion enthält. Die Zuleitung der Ansaugluft zu dem Einlaßbereich der Brennkraftmaschine kann auch unter einem Druck erfolgen, der oberhalb des Druckes im Zylinder während dessen Befüllung liegt. Die Erfindung eignet sich sowohl für 4-Taktverfahren als auch für 2-Taktverfahren.

## Patentansprüche

1. Verfahren zur Bereitstellung eines brennfähigen Arbeitsgases für eine Brennkraftmaschine aus Ansaugluft und einem kryogen gespeicherten Kryokraftstoff, bei welchem der Kryokraftstoff aus einem wärmeisolierten Kraftstoffvorratsbehältnis entnommen wird, und der entnommene Kraftstoff durch einen Ansaugluftwärmetauscher geleitet und hierbei erwärmt wird, wobei in dem Wärmetauscher die Ansaugluft zunächst auf eine Temperatur abgekühlt wird, bei welcher etwaige in der Ansaugluft enthaltene Feuchtigkeit ausfällt, das hierbei ausfallende Wasser abgeleitet wird und die getrocknete Luft weiter abgekühlt wird.

2. Verfahren nach Anspruch 1, **dadurch gekennzeichnet, daß** der Kraftstoff in gasförmigem Zustand durch den Wärmetauscher geleitet wird.

3. Verfahren nach Anspruch 1 oder 2, **dadurch gekennzeichnet, daß** der Kraftstoff zumindest abschnittsweise in flüssigem Zustand durch den Wärmetauscher geleitet wird.

4. Verfahren nach wenigstens einem der Ansprüche 1 bis 3, **dadurch gekennzeichnet, daß** der Wärmeaustausch zwischen der Ansaugluft und dem Kraftstoff nach dem Gegenstromprinzip erfolgt.

5. Verfahren nach wenigstens einem der Ansprüche 1 bis 4, **dadurch gekennzeichnet, daß** als Kraftstoff Wasserstoff verwendet wird.

6. Verfahren nach wenigstens einem der Ansprüche 1 bis 5, **dadurch gekennzeichnet, daß** der Kraftstoff eine Temperatur von weniger als 24K aufweist.

7. Verfahren nach wenigstens einem der Ansprüche 1 bis 6, **dadurch gekennzeichnet, daß** die getrocknete und gekühlte Ansaugluft und der Kryokraftstoff vor Einbringen in einen Brennraum miteinander vermischt werden.

8. Verfahren nach wenigstens einem der Ansprüche 1 bis 6, **dadurch gekennzeichnet, daß** der Kryokraftstoff separat von der gekühlten und getrockneten Luft in den Brennraum eingebracht wird.

9. Verfahren nach wenigstens einem der Ansprüche 1 bis 8, **dadurch gekennzeichnet, daß** die Ansaugluft über eine dem Wärmetauscher vorangestellte Fördereinrichtung, insbesondere einen Lader dem Brennraum zugeführt wird.

10. Vorrichtung zur Bereitstellung eines brennfähigen Arbeitsgases aus kryogen gespeichertem Kryokraftstoff und sauerstoffhaltiger Ansaugluft für eine Brennkraftmaschine, mit einer Entnahmeeinrichtung zur Entnahme von Kryokraftstoff aus einem wärmeisolierten Kraftstoffvorratsbehältnis, einem Wärmetauscher (6) zur Erwärmung des entnommen Kryokraftstoffes und zur Kühlung der Ansaugluft, wobei in dem Wärmetauscher (6) ein erster Wärmetauscherabschnitt (6a) ausgebildet ist, zur Abkühlung der Ansaugluft auf eine Temperatur unterhalb des Taupunktes, wobei weiterhin eine Ableitungseinrichtung (7) zur Ableitung ausfallenden Wassers und ein zweiter Wärmetauscherabschnitt (6b) vorgesehen sind, zur weiteren Abkühlung der getrockneten Ansaugluft.

11. Vorrichtung nach Anspruch 10, **dadurch gekennzeichnet, daß** der Wärmetauscher (6) als Gas/Gas Wärmetauscher ausgebildet ist.

12. Vorrichtung nach Anspruch 10 oder 11, **dadurch gekennzeichnet, daß** der Wärmetauscher (6) als Flüssig/Gas Wärmetauscher ausgebildet ist, derart, daß der Kraftstoff zumindest abschnittsweise in flüssigem Zustand den Wärmetauscher (6) durchströmt.

13. Vorrichtung nach wenigstens einem der Ansprüche 10 bis 12, **dadurch gekennzeichnet, daß** der Wärmetauscher (6) ein Gegenstromwärmetauscher ist.

14. Vorrichtung nach wenigstens einem der Ansprüche 10 bis 13, **dadurch gekennzeichnet, daß** eine Fördereinrichtung vorgesehen ist, zur Förderung des Kryokraftstoffs durch den Wärmetauscher (6) unter einem gegenüber dem Tankdruck erhöhten Druck.

15. Vorrichtung nach wenigstens einem der Ansprüche 10 bis 14, **dadurch gekennzeichnet, daß** eine Fördereinrichtung vorgesehen ist, zur Förderung der Ansaugluft in den Wärmetauscher (6) auf einem gegenüber dem Umgebungsdruck erhöhten Druckniveau.
